# DEMANDE DE BREVET EUROPEEN

(11) **EP 3 736 644 A1**
(43) Date de publication de la demande: **11.11.2020**
(21) Numéro de dépôt: 19173329.4
(22) Date de dépôt: 08.05.2019
(51) Int. Cl.: G04B 39/02, G04B 37/08

(54) **BOITE DE MONTRE ETANCHE**

(71) Demandeur: Omega SA, 2502 Biel/Bienne (CH)
(72) Inventeur: KALTENRIEDER, Cédric, 2608 Courtelary (CH); KISSLING, Gregory, 2532 Macolin (CH); WINKLER, Yves, 3185 Schmitten (CH)
(74) Mandataire: ICB SA

(57) **Abrégé**

La boîte de montre (1) étanche à l'eau d'une montre de plongée, comprend un fond (4) monté sur un côté inférieur d'une carrure (2), et une glace (3) montée sur un côté supérieur de la carrure. La glace comprend une surface périphérique annulaire (13) montée par une première partie (5) d'un joint annulaire en métal amorphe sur une surface intérieure annulaire (12) de forme complémentaire du côté supérieur de la carrure. Une seconde partie (5') du joint sur la première partie du joint maintient la glace à la carrure. La surface périphérique annulaire de la glace est inclinée vers l'intérieur de la boîte de montre d'un angle plus petit que 90° par rapport à un axe central perpendiculaire au plan de boîte de montre pour répartir des contraintes entre la glace et la carrure dues à la pression de l'eau lors d'une plongée. La surface périphérique annulaire et la surface intérieure annulaire sont de forme conique.

## Description

### DOMAINE TECHNIQUE

La présente invention concerne une boîte de montre étanche notamment pour une montre de plongée.

### ARRIERE-PLAN TECHNOLOGIQUE

Pour prévoir l'utilisation d'une montre mécanique ou électronique sous l'eau, la boîte de montre, qui comprend un mouvement horloger ou un module horloger à base de temps, doit être fermée de manière bien étanche. Pour ce faire, la boîte de montre comprend un fond fixé de manière étanche à un premier côté d'une carrure et une glace fixée à un second côté opposé de la carrure. Des garnitures d'étanchéité sont prévues à l'assemblage du fond, de la carrure et de la glace de montre. Un organe de contrôle ou réglage de fonctions de la montre est monté également de manière étanche à travers la carrure de la boîte en position de repos.

Généralement des boîtes de montre ne sont pas configurées ou assemblées pour supporter de fortes pressions d'eau par exemple lors d'une plongée étant donné que la pression à l'intérieur de la boîte de montre est proche de la pression atmosphérique. De simples garnitures d'étanchéité de montres traditionnelles ne suffisent pas pour garantir une bonne étanchéité à l'eau de la boîte lors d'une plongée à de très grandes profondeurs sous l'eau.

On peut citer la demande de brevet CH 690 870 A5 qui décrit une boîte de montre étanche. La boîte de montre est constituée d'une glace fixée d'un côté supérieur à une carrure-lunette et d'un fond fixé à la carrure en le vissant à un taraudage intérieur de la carrure. La glace est fixée à la carrure par une garniture d'étanchéité annulaire de forme torique et en appui sur un bord de carrure. Une garniture d'étanchéité est aussi prévue entre un bord extérieur du fond et une surface inférieure de la carrure. Comme à forte pression d'eau le taraudage peut s'abîmer, il est encore prévu une cuvette en métal résistant en appui contre une surface intérieure du fond et contre un rebord intérieur de la carrure. Cependant même avec un tel agencement de boîte de montre, cela ne permet pas de garantir une bonne étanchéité de la boîte lors d'une plongée à de très grandes profondeurs sous l'eau, ce qui constitue un inconvénient.

Le brevet CH 372 606 décrit une boîte de montre étanche, qui a une partie centrale ou carrure entourant un fond et fermée par une glace. Une bague filetée est en appui contre une surface extérieure inclinée du fond pour le retenir, et est vissée à une partie de fixation connectée à la carrure. Avec un tel agencement présenté, cela ne permet pas de garantir une bonne étanchéité de la boîte lors d'une plongée à de très grandes profondeurs sous l'eau, ce qui constitue un inconvénient.

### RESUME DE L'INVENTION

L'invention a donc pour but principal de pallier les inconvénients de l'état de la technique décrit ci-dessus en proposant une boîte de montre étanche à l'eau adaptée pour supporter les fortes pression d'eau pour une plongée à de grandes profondeurs sous l'eau.

A cet effet, la présente invention concerne une boîte de montre étanche à l'eau, qui comprend les caractéristiques de la revendication indépendante 1.

Des formes particulières d'exécution d'une boîte de montre étanche à l'eau sont définies dans les revendications dépendantes 2 à 15.

Un avantage de la boîte de montre étanche à l'eau réside dans le fait que la glace est fixée à la carrure par l'intermédiaire d'un joint et avec des surfaces de contact inclinées de la carrure et de la glace. Dans le cas d'une carrure de forme générale cylindrique, des surfaces d'appui coniques sont prévues sur la glace et la carrure, voire aussi sur le fond monté d'un côté opposé de la carrure. De cette manière, des efforts de pression sur la glace et le fond sont transmis à la carrure via des surfaces d'appui coniques.

Dans le cas de la glace, sa tenue ainsi que l'étanchéité de sa liaison à la carrure peuvent être assurées par une seconde partie du joint de fixation en polymère (par exemple en polyuréthane). Les efforts de pression sont transmis à une première partie du joint qui est réalisée dans un métal possédant des propriétés mécaniques supérieures à celles de la carrure, notamment une limite élastique supérieure et idéalement une déformation élastique supérieure. Il peut s'agir d'un joint en alliage métallique amorphe ou en alliage TNTZ-O (TiNb23Ta0.7Zr2O1.2) pour une carrure en titane. Cela permet d'éviter les concentrations de contraintes d'une part sur la carrure et ainsi éviter sa plastification et d'autre part sur la glace et ainsi d'éviter sa rupture et/ou de réduire son épaisseur. La première partie du joint en métal peut être un composant qui est déposé sur l'appui conique de la carrure avant le montage de la glace. La première partie du joint peut aussi avoir été solidarisée à la carrure dans une étape préalable (par ex. par formage à chaud ou fabrication additive) et donc faire partie intégrante de la carrure au moment du montage de la glace.

### BREVE DESCRIPTION DES FIGURES

Les buts, avantages et caractéristiques d'une boîte de montre étanche à l'eau apparaîtront mieux dans la description suivante de manière non limitative en regard des dessins sur lesquels :
- les figures 1a et 1b représentent de manière simplifiée une coupe transversale d'une forme d'exécution d'une montre avec une boîte étanche à l'eau selon l'invention, et une coupe partielle de détail de la fixation de la glace à la carrure selon l'invention,
- la figure 2 représente une coupe partielle de détail d'une variante de la fixation de la glace à la carrure selon l'invention,
- la figure 3 représente schématiquement une vue de dessus d'une forme d'exécution d'une boîte de montre selon l'invention, et
- les figures 4a et 4b représentent une glace avec un revêtement métallique susceptible d'être gravé par un laser pour la réalisation d'une inscription sur la surface de montage de la glace sur la carrure, et une portion du revêtement métallique sur la glace avec l'inscription selon l'invention.

### DESCRIPTION DETAILLEE DE L'INVENTION

Dans la description suivante, tous les composants d'une boîte de montre étanche à l'eau notamment d'une montre de plongée, qui sont bien connus d'un homme du métier dans ce domaine technique ne sont relatés que de manière simplifiée.

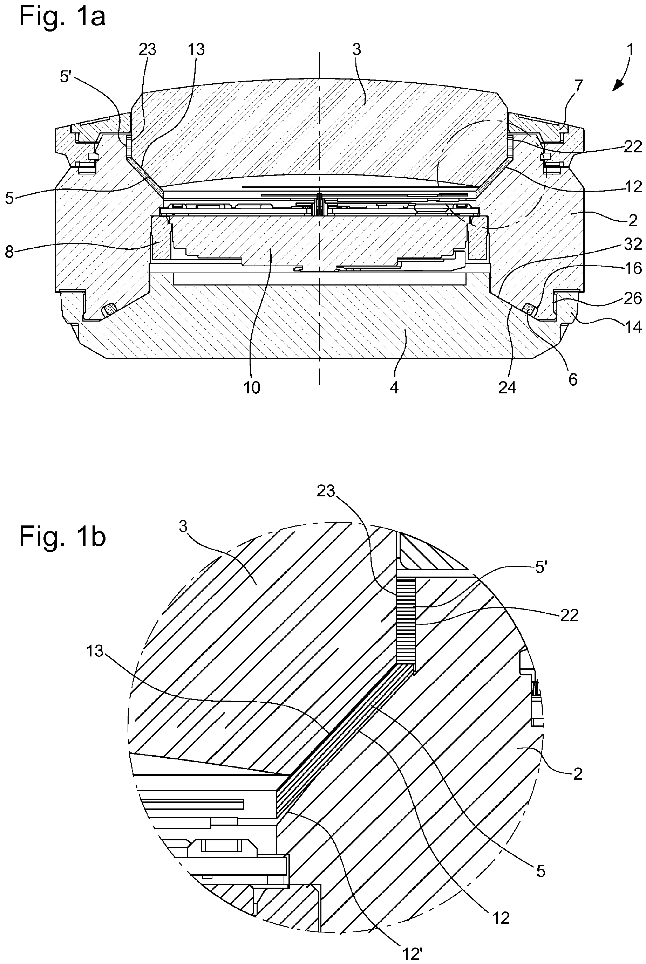

Les figures 1a et 1b représentent une forme d'exécution d'une boîte de montre 1, qui peut être utilisée pour une montre de plongée. La boîte de montre 1 comprend essentiellement une glace 3, qui peut être en saphir ou en verre minéral, fixée sur un côté supérieur d'une carrure 2, et éventuellement un fond 4 monté sur un côté inférieur de la carrure 2. Une lunette 7 peut encore être montée sur le côté supérieur de la carrure 2. Un mouvement ou module horloger 10 est disposé dans la boîte de montre 1 dans un cercle d'emboîtage 8, et au moins un organe de contrôle non représenté peut être monté de manière étanche en position de repos sur ou à travers la carrure 2 pour le réglage de l'heure, de la date ou d'autres fonctions de la montre de plongée.

Dans le cas où il est prévu un fond 4 de la boîte de montre 1, le fond 4, qui est de préférence de structure massive, comprend un bord annulaire 14 à taraudage intérieur pour être vissé sur un taraudage 26 sur le côté inférieur de la carrure 2. Une surface d'appui annulaire 24 du fond 4 vient en contact d'une surface intérieure annulaire 32 de la carrure 2 de forme complémentaire à la surface d'appui 24 lors du montage du fond 4 sur la carrure 2. Les surfaces d'appui 24 et intérieure 32 sont inclinées d'un angle déterminé par rapport à un axe perpendiculaire à un plan de boîte de montre 1. Dans le cas d'une carrure de forme générale cylindrique, les surfaces 24, 32 sont de forme conique et inclinées vers l'intérieur de la boîte de montre 1 d'un angle déterminé par rapport à un axe central de la boîte de montre 1. Cela signifie que le sommet de chaque forme de cône est en direction de l'intérieur de la boîte de montre 1. Le côté inférieur de la carrure 2 comprend encore une rainure annulaire 16 logeant une garniture d'étanchéité 6 en contact de la surface d'appui 24 lors du montage du fond 4 sur la carrure 2. La rainure annulaire 16 est de section transversale rectangulaire pour que la garniture d'étanchéité 6 soit bien maintenue dans la rainure annulaire 16 avant la fixation du fond 4. Pour une carrure 2 et un fond 4 réalisés dans un matériau, tel que le titane, l'angle peut être de l'ordre de 60° ± 5° par rapport à l'axe central. Ceci permet d'avoir une bonne répartition des contraintes entre le fond 4 et la carrure 2 dues à la pression de l'eau lors d'une plongée à de grandes profondeurs sous l'eau.

La glace 3 comprend une surface périphérique annulaire 13 pour être montée par l'intermédiaire d'au moins une partie d'un joint 5, 5' sur une surface intérieure annulaire 12 du côté supérieur de la carrure 2. La surface intérieure annulaire 12 est de préférence de forme complémentaire à la surface périphérique annulaire 13. La surface périphérique annulaire 13 de la glace 3 est inclinée d'un angle défini plus petit que 90° par rapport à un axe perpendiculaire à un plan de boîte de montre 1. De préférence, la surface intérieure annulaire 12 est inclinée généralement vers l'intérieur de la boîte de montre 1 d'un même angle que la surface périphérique annulaire 13 par rapport à un axe central.

Si la carrure 2, par exemple en titane, est de forme générale cylindrique, la surface intérieure périphérique 13 et la surface intérieure annulaire 12 sont de forme conique et inclinées d'un angle défini vers l'intérieur de la boîte de montre. Cela signifie que le sommet de chaque forme de cône est en direction de l'intérieur de la boîte de montre 1. L'angle défini d'inclinaison des surfaces 12 et 13 peut être de l'ordre de 43° ± 5° par rapport à l'axe central. Ceci permet d'avoir une bonne répartition des contraintes entre la glace 3 et la carrure 2 par l'intermédiaire de la première partie 5 du joint dues à la pression de l'eau lors d'une plongée à de grandes profondeurs sous l'eau. La différence de pression de l'eau par rapport à la pression à l'intérieur de la boîte de montre 1 a tendance à fermer tout interstice entre les surfaces 12, 13 en contact et le joint 5, 5' de fixation grâce à l'inclinaison des surfaces de contact vers l'intérieur de la boîte de montre 1. Cela garantit une bonne étanchéité et une résistance à de fortes pressions.

Dans cette forme d'exécution, le joint 5, 5' de fixation peut de préférence être composé d'une première partie 5 en alliage métallique amorphe et d'une seconde partie 5' réalisée en polymère (par exemple en polyuréthane) pour la retenue de la glace 3 à la carrure 2. Le joint 5, 5' de fixation est de forme annulaire pour la fermeture hermétique de la glace 3 sur la carrure 2. Pour une carrure 2 de forme générale cylindrique, la première partie 5 du joint est de forme conique, alors que la seconde partie 5' est en appui sur le bord supérieur de la première partie 5 et est cylindrique. Une fois la glace 3 chassée sur la carrure 2, la première partie 5 relie les surfaces inclinées de la carrure 2 et de la glace 3 en appui sur la première partie 5, alors que la seconde partie 5' est comprimée entre la paroi intérieure annulaire 22 de la carrure 2 et la paroi extérieure annulaire 23 de la glace 3 au-dessus de la surface périphérique annulaire 13 de la glace 3. La seconde partie 5' peut s'arrêter à mi-hauteur de la glace 3 juste en dessous de la lunette 7, alors que la première partie 5 du joint peut se prolonger au-dessous du niveau de la liaison entre le bas de la glace 3 et la carrure 2.

A titre non limitatif, la longueur de la première partie 5 en section transversale peut être de l'ordre de 5 mm, alors que la hauteur de la seconde partie du joint 5, 5' peut être de l'ordre de 2.5 mm. L'épaisseur du joint peut être de l'ordre de 0.65 mm.

La première partie 5 du joint est du type porteur de la glace 3 sur la carrure 2. Lorsque la boîte de montre 1 est plongée sous l'eau à de grandes profondeurs, cela permet de fermer tout espace entre la glace 3 et la carrure 2 grâce aux surfaces inclinées 12 et 13 de la glace 3 et de la carrure 2 et par l'intermédiaire de la première partie métallique 5 du joint. Une bonne répartition des contraintes est donc réalisée entre la glace 3 et la carrure 2 grâce à la première partie métallique 5 du joint, qui est de préférence en alliage métallique amorphe.

Lorsque la boîte de montre 1 est plongée sous l'eau à de faibles profondeurs, la partie 5' du joint permet d'assurer l'étanchéité et la tenue de la glace sur la carrure. Plus la boîte est plongée sous l'eau à des profondeurs importantes, plus la glace est comprimée contre la partie 5 du joint qui elle-même est comprimé contre le plan incliné de la carrure ce qui permet d'assurer l'étanchéité même à des très grandes profondeurs sans risquer de dégrader le joint. Aux grandes profondeurs, la partie 5' du joint vient s'appuyer contre le haut de la partie 5 du joint, ce qui évite à la partie 5' de se dégrader par extrusion. L'utilisation d'un matériau ayant des propriétés mécaniques très élevées (notamment la limite élastique et la déformation élastique) pour la partie 5 du joint est nécessaire pour éviter sa plastification et assurer une homogénéisation des contraintes sur la carrure lors de la plongée de la montre à de grandes profondeurs.

Par exemple, les propriétés mécaniques particulières des métaux amorphes, notamment leur limite élastique σₑ très élevée (p.ex : 1700 MPa pour une base Zr; 1550 MPa pour une base Pd; 1350 MPa pour une base Pt) couplée à une déformation élastique εₑ très élevée (1.5 à 2% pour tous les métaux amorphes), permettent d'éviter la plastification du joint 5, 5' dans sa zone de contact avec la glace 3 lors d'une sollicitation à des pressions très élevées. La carrure 2, dont les propriétés mécaniques (p.ex. pour du titane grade 5 : σₑ 850 MPa; εₑ 0.5 à 0.8%) sont inférieures aux métaux amorphes choisis pour le joint, ne plastifie pas non plus car le joint 5, 5' en métal amorphe permet d'homogénéiser les contraintes, qui diminuent alors au niveau de l'interface joint - carrure.

Un autre exemple d'alliage intéressant pour la fabrication du joint 5 est un alliage de type TNTZ-O (TiNb23Ta0.7Zr2O1.2) qui présente une limite élastique de 1'000-2'000 MPa avec une déformation élastique de l'ordre de 1-2%.

A titre informatif, la réalisation de la première partie 5 du joint en métal amorphe peut être faite par différents procédés de mise en forme soit :
- directement à partir du métal en fusion tels que par exemple, l'injection sous pression, la coulée gravitationnelle, la coulée centrifuge, la coulée antigravitationnelle, la coulée par succion, la fabrication additive de poudre,
- à partir de préformes amorphes par déformation à chaud au-dessus de la température de transition vitreuse comme par exemple, le formage électromagnétique, le formage par décharge capacitive, le formage sous pression de gaz, le formage mécanique. L'objectif de cette étape est d'obtenir une préforme ayant les bonnes dimensions et ayant une proportion de phase amorphe suffisante pour que les propriétés mécaniques soient adaptées.

Il est encore à noter que la surface intérieure annulaire 12 de la carrure 2 est inclinée vers l'intérieur de la boîte de montre 1 et se termine par une surface courbée 12' vers l'intérieur sur environ 3° à la suite de la surface intérieure annulaire 12. Ainsi la première partie 5 du joint n'est plus en contact direct avec cette surface courbée 12'. Par contre, lorsque la pression d'eau augmente de manière substantielle en plongée, la première partie 5 du joint est poussée par la glace 3 vers l'intérieur pour contacter ou épouser la surface courbée 12'. Cela permet ainsi d'éviter que la pression du coin intérieur de la glace 3 concentre les contraintes dans la première partie 5 du joint en risquant de le casser.

Plusieurs types alliages métalliques amorphes peuvent être utilisés pour réaliser la première partie 5 du joint de fixation. Dans les cas les plus fréquents, l'alliage métallique amorphe peut être principalement composé de zirconium.. L'alliage métallique amorphe à base de zirconium peut être composé de Zr(52.5%), Cu(17.6%), Ni(14.9%), Al(10%) et Ti(5%). L'alliage métallique amorphe à base de zirconium peut aussi comprendre Zr(58.5%), Cu(15.6%), Ni(12.8%), Al(10.3%) et Nb(2.8%). L'alliage de métaux amorphes à base de zirconium peut aussi comprendre Zr(44%), Ti(11%), Cu(9.8%), Ni(10.2%) et Be(25%), ou finalement Zr(58%), Cu(22%), Fe(8%) et Al(12%). Il est également possible de réaliser la première partie du joint en alliage métallique amorphe principalement composé de platine (Pt).. L'alliage métallique amorphe à base de platine peut comprendre Pt(57.5%), Cu(14.7%), Ni(5.3%) et P(22.5%). Il peut aussi être prévu de réaliser la première partie du joint en alliage métallique amorphe à base principalement de palladium (Pd).

On peut citer encore d'autres alliages métalliques amorphes. Un alliage métallique amorphe à base de titane peut comprendre Ti(41.5%), Zr(10%), Cu(35%), Pd(11%) et Sn(2.5%). Un alliage de métallique amorphe à base de palladium peut comprendre Pd(43%), Cu(27%), Ni(10%) et P(20%), ou Pd(77%), Cu(6%) et Si(16.5%), ou finalement Pd(79%), Cu(6%), Si(10%) et P(5%). Un alliage de métaux amorphes à base de nickel peut comprendre Ni(53%), Nb(20%), Ti(10%), Zr(8%), Co(6%) et Cu(3%), ou Ni(67%), Cr(6%), Fe(4%), Si(7%), C(0.25%) et B(15,75%), ou finalement Ni(60%), Pd(20%), P(17%) et B(3%). Un alliage de métaux amorphes à base de fer peut comprendre Fe(45%), Cr(20%), Mo(14%), C(15%) et B(6%), ou Fe(56%), Co(7%), Ni(7%), Zr(8%), Nb(2%) et B(20%). Un alliage de métaux amorphes à base d'or peut comprendre Au(49%), Ag(5%), Pd(2.3%), Cu(26.9%) et Si(16.3%).

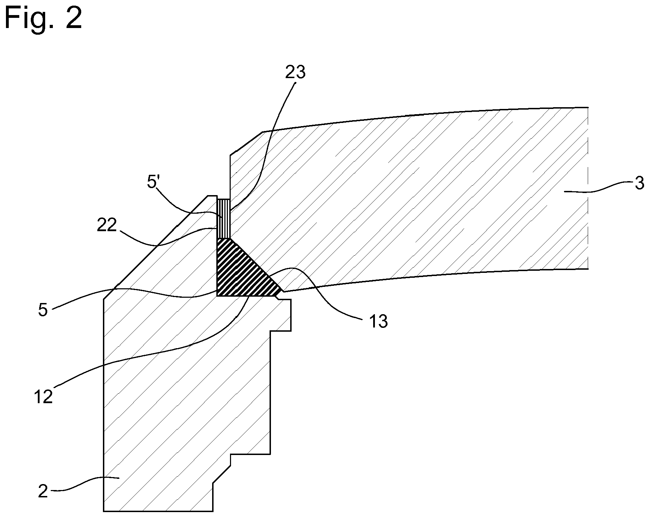

La figure 2 représente une coupe partielle de détail d'une variante de la fixation de la glace 3 à la carrure 2. La glace 3 comprend une surface périphérique annulaire 13 pour être montée par l'intermédiaire d'une première partie 5 du joint sur une surface intérieure annulaire 12 du côté supérieur de la carrure 2. Si la carrure 2 est de forme générale cylindrique, la surface intérieure périphérique 13 de la glace 3 est de forme conique, alors que la surface intérieure annulaire 12 de la carrure 2 est dans le plan de la boîte de montre 1 en forme de portion d'un disque. La première partie 5 du joint en alliage métallique au moins partiellement amorphe est entre la surface intérieure périphérique 13 et la surface intérieure annulaire 12, alors que la seconde partie 5' du joint en polymère est entre la paroi intérieure annulaire 22 de la carrure 2 et la paroi extérieure annulaire 23 de la glace 3.

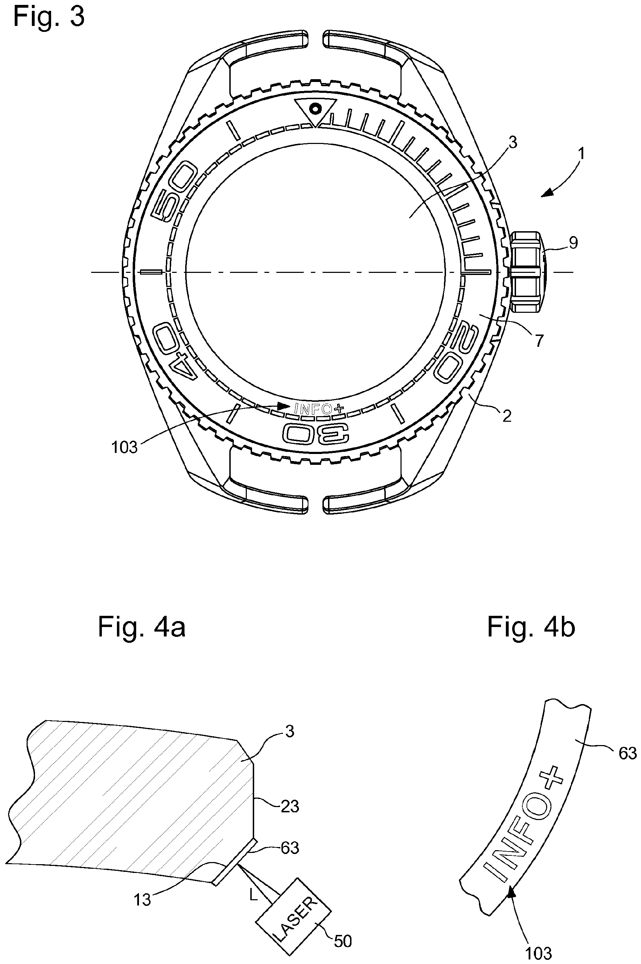

La figure 3 montre schématiquement une vue de dessus d'une forme d'exécution d'une boîte de montre 1. La boîte de montre 1 comprend la carrure 2, la glace 3, une lunette 7 et un organe de contrôle 9 sous la forme d'une tige-couronne traversant la carrure 2. La tige-couronne comprend une surface conique non représentée en contact d'une surface intérieure conique de la carrure 2 en position de repos pour assurer l'étanchéité et la résistance à la pression de l'eau en plongée. Une inscription 103 d'un mot ou d'un nombre ou de dessins est réalisée à la connexion de la surface périphérique annulaire 13 de la glace 3 sur la première partie du joint de fixation.

Comme représenté sur les figures 4a et 4b pour réaliser l'inscription 103, il peut être encore prévu d'avoir une surface de contact de la glace 3 structurée et/ou avec une couche décorative déposée à sa surface. Cette structuration et/ou dépôt 63 peuvent être disposés sur la surface périphérique annulaire 13 de la glace 3. Il peut encore être prévu d'écrire un ou plusieurs mots, ou nombres ou dessins par gravure du dépôt 63 au moyen d'un faisceau laser L provenant d'un appareil laser 50. Le dépôt 63 peut être d'une couleur différente de la première partie du joint de fixation. De ce fait après la gravure de l'inscription 103 sur le dépôt 63, la surface périphérique annulaire 13 de la glace 3 peut être posée ou fixée sur la première partie du joint de fixation, qui est d'une autre couleur que le dépôt 63.

Il peut être également prévu de créer un motif sur la surface de contact de la glace 3 par une structuration sélective de sa surface. Il est possible de structurer la surface par exemple par un laser, par un procédé chimique ou encore par un procédé mécanique (par exemple meulage, fraisage). Ainsi une fois la glace 3 fixée à la carrure 2, il est possible de lire l'inscription réalisée à travers la glace 3, qui peut être aussi l'indication de la marque de montre.

Il est encore à relever qu'avec la fixation de la glace 3 sur la carrure 2 par la seconde partie 5' du joint décrite ci-dessus et avec le contact de surfaces coniques entre la glace 3 et la carrure 2 par l'intermédiaire de la première partie 5 du joint, il est garanti une parfaite étanchéité et une bonne répartition des contraintes entre la glace 3 et la carrure 2. Ceci est nécessaire étant donné que la montre est une montre de plongée qui doit supporter de fortes contraintes dues à la différence de pression entre l'intérieur de montre et la pression de l'eau en grande profondeur sous l'eau. Comme la surface de contact entre la carrure 2, le joint 5, 5' et la glace 3 est assez grande avec cette forme conique, il y a une meilleure transmission des contraintes sur une plus grande surface, ce qui est important pour garantir l'étanchéité de la montre lors d'une plongée profonde sous l'eau. Avec cet agencement, la pression de l'eau sur la boîte de montre tend à fermer tout interstice entre les surfaces de contact. De plus, cela évite l'extrusion du joint de fixation.

A partir de la description qui vient d'être faite, plusieurs variantes de réalisation de la boîte de montre peuvent être conçues par l'homme du métier sans sortir du cadre de l'invention définie par les revendications. La boîte de montre par sa carrure peut avoir une forme générale différente d'un cylindre.

## Revendications

1. Boîte de montre (1) étanche à l'eau, notamment pour une montre de plongée, la boîte (1) comprenant au moins une glace (3) montée sur un côté supérieur de la carrure (2),
**caractérisée en ce que** la glace (3) comprend une surface périphérique annulaire (13) pour être montée par l'intermédiaire d'au moins une partie d'un joint (5, 5') de forme annulaire sur une surface intérieure annulaire (12) du côté supérieur de la carrure (2), et
**en ce que** la surface périphérique annulaire (13) de la glace (3) est inclinée vers l'intérieur de la boîte de montre (1) d'un angle défini plus petit que 90° par rapport à un axe central perpendiculaire à un plan de boîte de montre de manière à répartir des contraintes entre la glace (3) et la carrure (2) dues à la pression de l'eau lors d'une plongée.

2. Boîte de montre (1) selon la revendication 1, **caractérisée en ce que** la partie du joint (5) entre la surface périphérique annulaire (13) et la surface intérieure annulaire (12) est en alliage métallique au moins partiellement amorphe.

3. Boîte de montre (1) selon l'une des revendications 1 et 2, **caractérisée en ce que** la surface intérieure annulaire (12) du côté supérieur de la carrure (2) est de forme complémentaire à la surface périphérique annulaire (13) de la glace.

4. Boîte de montre (1) selon la revendication 3, **caractérisée en ce que** le joint (5, 5') est composé d'une première partie (5) disposée entre la surface périphérique annulaire (13) de la glace (3) et la surface intérieure annulaire (12) de la carrure (2), et d'une seconde partie (5') en contact entre une paroi intérieure annulaire (22) de la carrure (2) au-dessus de la surface intérieure annulaire (12) et une paroi extérieure annulaire (23) de la glace (3) au-dessus de la surface périphérique annulaire (13).

5. Boîte de montre (1) selon la revendication 4, **caractérisée en ce que** les parois annulaires (22, 23) sont parallèles à l'axe central.

6. Boîte de montre (1) selon la revendication 4, **caractérisée en ce que** la première partie (5) du joint de fixation est en alliage métallique au moins partiellement amorphe, et **en ce que** la seconde partie (5') du joint de fixation est en polymère pour fixer la glace (3) à la carrure (2).

7. Boîte de montre (1) selon l'une des revendications 2 et 6, **caractérisée en ce que** l'alliage métallique amorphe d'au moins une partie du joint (5, 5') est à base principalement de zirconium.

8. Boîte de montre (1) selon l'une des revendications 2 et 6, **caractérisée en ce que** l'alliage métallique amorphe d'au moins une partie du joint (5, 5') est à base principalement de platine.

9. Boîte de montre (1) selon l'une des revendications 2 et 6, **caractérisée en ce que** l'alliage métallique amorphe d'au moins une partie du joint (5, 5') est à base principalement de palladium.

10. Boîte de montre (1) selon la revendication 4, **caractérisée en ce que** la surface périphérique annulaire (13) de la glace (3) et la surface intérieure annulaire (12) de la carrure (2) sont des surfaces coniques, et **en ce que** la paroi intérieure annulaire (22) de la carrure (2) et la paroi extérieure annulaire (23) de la glace (3) sont des surfaces cylindriques.

11. Boîte de montre (1) selon la revendication 1, **caractérisée en ce que** l'angle défini d'inclinaison de la surface périphérique annulaire (13) de la glace (3) est de l'ordre de 43° ± 5° par rapport à l'axe central.

12. Boîte de montre (1) selon la revendication 4, **caractérisée en ce que** l'angle défini d'inclinaison de la surface périphérique annulaire (13) de la glace (3) et de la surface intérieure annulaire (12) de la carrure (2) est de l'ordre de 43° ± 5° par rapport à l'axe central.

13. Boîte de montre (1) selon la revendication 1, **caractérisée en ce que** la surface périphérique annulaire (13) de la glace (3) comprend un dépôt (63) pour graver par faisceau laser une inscription (103).

14. Boîte de montre (1) selon la revendication 13, **caractérisée en ce que** la couleur du dépôt (63) est différente d'une première partie (5) du joint de fixation de manière à visionner l'inscription à travers la glace (3) de l'extérieur de la boîte de montre.

15. Boîte de montre (1) selon la revendication 1, **caractérisée en ce que** la surface périphérique annulaire (13) de la glace (3) comprend une structuration destinée à créer une décoration (103).
